# EUROPEAN PATENT APPLICATION

(11) **EP 2 487 034 A1**
(43) Date of publication of application: **15.08.2012**
(21) Application number: 11382303.3
(22) Date of filing: 23.09.2011
(51) Int. Cl.: B32B 27/20, B65D 90/02

(54) **Multilayer plastic container**

(30) Priority: 11.02.2011 ES 201130131 U
(71) Applicant: Sotralentz Packaging S.A.S., 67320 Drulingen (FR)
(72) Inventor: Sanz Rivera, Juan, Manuel, 01213 Comunion (Alava) (ES); Gonzalez Teresa, Yolanda, 01213 Comunion (Alava) (ES)
(74) Representative: Carpintero Lopez, Francisco

(57) **Abstract**

Multilayer plastic container (1) with the capacity for visually distinguishing the different groups of products to be packaged only through the external display of the container, allowing classifying the different products according to the type of container and therefore preventing the mixing of containers which contain products incompatible with other products; which is formed by a plurality of layers (2, 3), and obtained by means of extrusion and blowing into a mold forming the shape of said container (1), characterized in that at least one layer (2) comprises pigments previously introduced when blowing of said container (1).

## Description

### Technical Field of the Invention

The present invention relates to a multilayer plastic container formed by means of an extrusion and blowing technique into a mold which forms the shape of said container; and wherein said container is applied in the transport and logistic sector, specifically in the organization of containers containing various products.

The purpose of this multilayer plastic container is the capacity for visually distinguishing the different groups of products to be packaged only through the external display of the container, allowing classifying the different products according to the type of container and therefore preventing the mixing of containers which contain products incompatible with other products, being able to produce undesired mixtures, as well as the degradation of the packaged product; and all of this with a simple shaped, economically viable container and with an easily automatable manufacturing process.

### Background of the Invention

By way of introduction, various packaging known as LBC (Large bulk containers), also designated as IBC (Intermediate Bulk Containers) which comprise different capacities, preferably comprise a capacity of 1000 liters and are formed by a hollow plastic container preferably of high density polyethylene; wherein the plastic container can optionally have an outer rigid envelope protecting the container against accidental blows and falls.

These IBC packaging are mainly intended for transporting and storing a wide range of various products from food products to highly toxic and dangerous products. It is possible, for example, that one and the same type and design of IBC packaging is intended to contain a food product or a flammable chemical product.

Additionally, it is known that the highly flammable products require rigorous safety measures and must therefore be easily identified in their transportation and storage, the existence of chemical products which are incompatible with one another and the joint storage of which is very dangerous is also seen.

Therefore, in view of the existing drawbacks related with:
- the mixing of various products which are incompatible with one another,
- the time loss due to the slow identification of the different product families existing in a same area, and
- the possible crossed contaminations during the processes of reusing the containers due to a cleaning deficiency thereof makes the appearance of a new packaging container which solves this problem necessary in terms of enabling the identification of these different stored product families in a fast and permanent manner and to prevent the closeness between stored products which are incompatible or which can put the safety of both the workers and the users of the products of each container in risk.

### Description of the Invention

The present invention relates to multilayer container of plastic material, i.e., formed by a plurality of layers; and wherein said container is formed by means of extrusion and blowing in a mold forming the shape of said container; as a clarification, the extrusion and blowing forming technique is similar to the injection molding technique, and it generally comprises the following steps:
- arranging a plastic material mass in at least one extruder;
- extruding the plastic material mass of considerably tubular shape known as parison towards the inside of a mold comprising the shape of the object to be extruded,
- injecting air inside of the tube forming the parison such that the inner cavity of the mold is inflated and occupied; and
- leaving to cool until the object has the suitable consistency to enable removing the mold without damaging the object formed.

And wherein the multilayer plastic container proposed by the invention allowing differentiating other containers containing different products therein in a quick manner; and therefore preventing the closeness between stored products which are incompatible or which can put the safety of both the workers and the users of the products of each container in risk as a result of the quick distinction thereof. To that end, the multilayer plastic container comprises at least one layer comprising pigments previously introduced when blowing said container such that from the extrusion and blowing forming process of each container, said container has at least one of their pigmented layers differentiating it from the other plastic containers.

It is observed that the pigments are previously introduced when blowing the container, therefore at least one of the layers undergoes a pigmentation treatment differentiating it from the rest of the layers, being able to add different types of pigments in different containers without the need of changing the extruder-blowing machine forming them, rather with only varying the type of pigment. And wherein this small variation gives rise to a container with the same shape and size but different in terms of color forming it since depending on the layer pigmented, the container can show a degree of different determined color intensity; and therefore being able to be differentiated not only by the type of pigment but also by the color intensity of the container formed.

In terms of the process for forming the container, this contemplates two options:
a) that the layer is pigmented prior to the extrusion of the plastic mass forming the layer to be pigmented; therefore the addition of the pigment is simplified by being able to be added in the selected plastic mass itself to form the layer to be pigmented.
b) that the layer is pigmented after the extrusion but prior to blowing; this option is more costly and complex, but it is also viable and has industrial application possibilities.

Particularly, and by way of example, the different families can be differentiated by the type and amount of pigments, they can be: containers to contain food products, containers to contain lubricants, containers to contain flammable products providing a protection against the electrostatic charges, containers to contain water for different uses, among them potable water; containers to contain light-sensitive products, etc. and therefore the pigmented container will allow distinguishing the different product families to be contained; thus for example, it is possible to provide a family of containers intended for the storage of food products with a pre-designed and unique color which allows the easy identification thereof in the distribution chain from the other containers which contain other types of products, some of them are highly toxic products. Likewise, the highly flammable products requiring rigorous safety measures can be easily identified in their transport and storage by means of the specific and unique color identification of the pigmented container.

Additionally, there are chemical products which are incompatible with one another and the joint storage of which is very dangerous; therefore the color identification of this type of products allows easy differentiation by the users, as well as the reduction of the risk produced by joint storage.

In terms of reusing the containers, an easy identification of the different product families according to the color of the plastic container is achieved and closed container reusing circuits for a type of product in particular can be established in a simple manner, thus preventing crossed contaminations by the use of re-used containers which have previously contained other class of product; this aspect is especially relevant in the food sector.

The possibility that at least one pigmented layer comprises the outer layer of the container plastic is contemplated since is can be possible that the outer layer is formed from a transparent material and with a treatment which improve its resistant characteristics against impacts, and which layer is the immediate layer towards the inside, which is pigmented such that the containers are also differentiated according to the type and intensity of the pigment applied. Wherein the advantage of having the outer layer as the pigmented layer is that possible interactions of the product to be contained with the colored layer are prevented and additionally the cost of the final product is reduced since only pigment has to be added to a layer of the plastic container. Different arrangement options of the at least one pigmented layer also can be contemplated, see for example the intermediate layers forming the container object of the invention.

Thus, according to the invention described, the multilayer plastic container proposed by the invention made up an advancement in the plastic containers known up until now and solves in a completely satisfactory manner the above disclosed problem, in terms of being capable of quickly distinguishing the different groups of products to be packaged only through the external display of the container; allowing classifying the different products according to the type of container, preventing the mixing of containers which contain products incompatible with other products; and all of this with a simple, economically viable container and with an easily automatable manufacturing process.

### Description of the Drawings

To complement the description that is being made and for the purpose of aiding to better understand the features of the invention according to a preferred practical embodiment thereof, a set of drawings is attached as an integral part of said description in which the following has been depicted with an illustrative and non-limiting character:

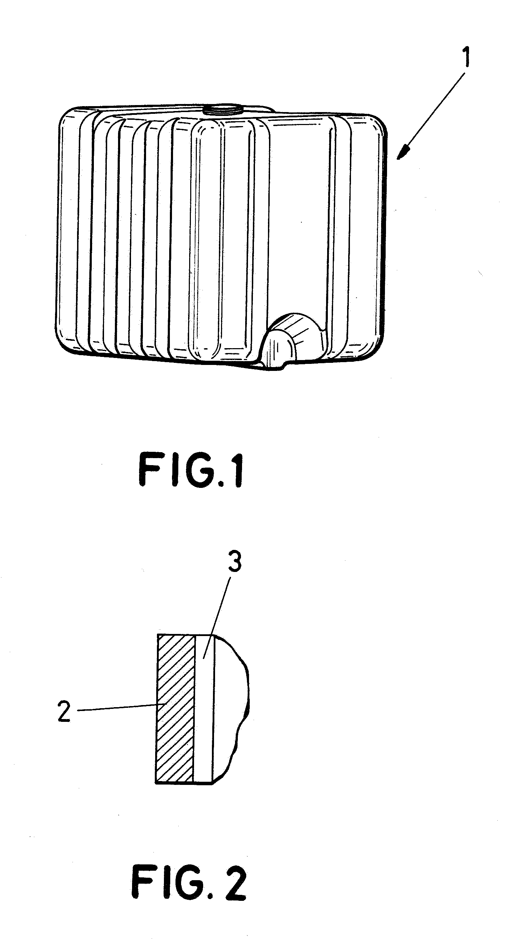

Figure 1 shows a three-dimensional schematic view of a plastic container formed by means of extrusion and blowing and formed by a plurality of layers.
Figure 2 shows a schematic view of the cross-section of a multilayer container.

### Preferred Embodiment of the Invention

In view of the drawings, it can be observed how in one of the possible embodiments of the multilayer plastic container (1) proposed by the invention, the latter has a layer (2) comprising pigments previously introduced to the step of extrusion for forming said container (1); specifically the pigmented layer (2) is the outer layer of the container plastic; thus the quick visual differentiation from the other containers (1) is assured, as a result of the pigmentation of the latter layer (2).

In terms of the process for forming the container (1), the latter can be structured in the following steps:
- providing a plastic material mass in the extruder configured for forming the outer layer (2) of the container (1);
- adding a determined amount of pigments to the plastic material mass wherein this pigmented mass plastic is known as 'masterbatch';
- mixing the plastic material masses and 'masterbatch' in the extruder;
- extruding the mixture of the plastic material mass and 'masterbatch' which comprises a considerably tubular shape towards the inside of a mold comprising the shape of the container (1),
- injecting air into the inside of the mixture tube such that the inner cavity of the mold is inflated and occupied; and
- leaving to cool until the container (1) has the suitable consistency to enable removing the mold without damaging the container (1) formed.

By taking into account that the described process is valid for the pigmented layer (2) such that for the different non-pigmented layers (3), only the step of adding pigments varies, and the other steps are the same; thus a container (1) of plastic material and formed by several layers (2, 3) wherein at least one of the layers (2) is pigmented and the rest is not pigmented (3) is obtained.

The 'masterbatch' portion in the process of extrusion and blowing is preferably in the range of 0.1% - 3% with respect to the pigmentless plastic mass; and preferably less than or equal to 1%; thus it does not incur an excessive cost of the final product since pigments have to be added only to a small portion of the entire mass forming the container (1).

In view of this description and the set of drawings, the person skilled in the art will understand that the embodiments of the invention which have been described can be combined in multiple manners within the object of the invention. The invention has been described according to some preferred embodiments thereof, but for the person skilled in the art it will be obvious that multiple variations can be introduced into said preferred embodiments without departing from the object of the invention claimed.

## Claims

1. Multilayer plastic container (1) formed by a plurality of layers (2, 3); and obtained by means of extrusion and blowing into a mold forming the shape of said container (1), **characterized in that** at least one layer (2) comprises pigments previously introduced when blowing of said container (1).

2. Multilayer plastic container (1) according to claim 1, **characterized in that** at least one layer (2) comprises pigments previously introduced to the extrusion of said container (1).

3. Multilayer plastic container according to any of the preceding claims, **characterized in that** said pigmented layer (2) comprises an outer layer of the plastic container (1).

4. Multilayer plastic container according to any of claims 1 and 2, **characterized in that** said at least one pigmented layer (2) comprises an intermediate layer of the plastic container (1).
